# EUROPÄISCHE PATENTSCHRIFT

(11) **EP 0 415 079 B1**
(45) Veröffentlichungstag und Bekanntmachung des Hinweises auf die Patenterteilung: **18.08.1993**
(21) Anmeldenummer: 90114313.1
(22) Anmeldetag: 26.07.1990
(51) Int. Cl.: C08G 77/54, C08G 77/58, C08G 77/22

(54) **Geformte Organosiloxanamin-Copolykondensate, Verfahren zu ihrer Herstellung und Verwendung (I)**
Formed organosiloxanaminpolycondensates, process for their preparation and their use
Polymères ayant une forme précise et à base d'organosiloxanamine-polycondensats, procédé pour leur préparation et leur emploi

(30) Priorität: 31.07.1989 DE 3925359
(43) Veröffentlichungstag der Anmeldung: 06.03.1991
(73) Patentinhaber: Degussa Aktiengesellschaft, 60311 Frankfurt (DE)
(72) Erfinder: Panster, Peter, Dr., D-6458 Rodenbach (DE); Wieland, Stefan, Dr., D-6050 Offenbach a.M. (DE)

(56) Entgegenhaltungen:
- EP-A- 0 282 737
- EP-A- 0 367 106
- DE-A- 2 155 281
- DE-C- 3 800 563

## Beschreibung

Gegenstand der Erfindung sind Copolykondensate eines tertiären Organosiloxanamins mit einer oder mehreren Siloxankomponenten, die gegenüber bereits entwickelten Organosiloxanamin-Copolykondensaten (DE-A-38 37 418) die verfahrens- sowie anwendungstechnischen Vorteile einer makroskopischen Kugelform haben. Gleichzeitig werden Verfahren beschrieben, nach denen die neuen Produkte nicht nur in der für die jeweilige Anwendung idealen Kugelgröße, sondern auch mit geeigneten physikalischen Eigenschaften hergestellt werden können. Weiterhin werden Verfahren zur Verwendung dieser geformten Organosiloxanamin-Copolykondensaten beschrieben.

Bereits bekannt sind die in der DE-B-31 20 214 beschriebenen unlöslichen Organosiloxanamine, die sich durch besonders gute chemische und physikalische Eigenschaften insbesondere im Vergleich zu analogen Systemen auf Basis organischer Polymerer oder auch speziell modifizierter anorganischer Polymersysteme auszeichnen. Diese Organosiloxanamine können als schwach basische lonenaustauscher, als Adsorbens, als Wirkstoffträger, als Träger heterogenisierter Komplexkatalysatoren oder als heterogene Base in basenkatalysierten Reaktionen eingesetzt werden.

Die Matrix dieser Produkte läßt sich in bezug auf chemische und physikalische Eigenschaften quasi maßgeschneidert herstellen und kann damit den Anforderungen der beispielhaft genannten Anwendungen angepaßt werden. Um den Anforderungen eines technischen Einsatzes gerecht zu werden, wurde weiterhin für diese neuen Polymeren ein Formgebungsverfahren entwickelt, das es ermöglicht, diese Produkte nicht nur in stückiger oder pulvriger Form, sondern auch in der vorteilhaften Kugelform herzustellen. Diese geformten Organosiloxanamine werden in der DE-A-38 00 563 beschrieben. Nachdem es sich bei verschiedenen Anwendungen der Organosiloxanamine als besonders günstig erwies, unterschiedlich funktionelle Gruppen in einer Polymermatrix miteinander zu kombinieren, wurden ferner entsprechende Organosiloxanamin-Copolykondensate entwickelt und in der DE-B-38 37 418 beschrieben. Durch die Kombination unterschiedlicher Funktionalitäten lassen sich synergistische Effekte erzeugen, d. h. Wirkungen, die über die Summe der Wirkungen der Einzelkomponenten hinausgehen, wobei gleichzeitig durch die verschiedenen Varianten der Anordnung derunterschiedlichen Funktionalitäten im Polymersystem, gegebenenfalls in Kombination mit Vernetzern, weitere Möglichkeiten eröffnet werden. Als ungünstig erwies es sich allerdings inzwischen auch für diese Copolykondensate, daß diese Produkte bisher nur in einer relativ undefinierten geometrischen Form und nicht in der anwendungstechnisch günstigen Kugelform mit den gewünschten physikalischen und morphologischen Eigenschaften hergestellt werden konnten.

Die EP-A- 02 82 737 betrifftAcylthioharnstoffgruppenhaltige Organopolysiloxane, die aber ebenfalls keine Kugelform besitzen.

Aufgabe der vorliegenden Erfindung ist daher, Organosiloxanamin-Copolykondensate der in der DE-A-38 37 418 beschriebenen Art in Kugelform und mit gewünschten physikalischen Eigenschaften reproduzierbar bereitzustellen. Diese Aufgabe wird erfindungsgemäß gelöst durch die Entwicklung von geformten Organosiloxanamin-Copolykondensaten, wie sie in den Ansprüchen 1 bis 3 angegeben sind.

Das Verhältnis der beiden Komponenten nach Formel (I) und Formel (11) ist sehr stark variierbar und kann in den in Anspruch 1 angegebenen Grenzen liegen, ohne daß Probleme mit den morphologischen, physikalischen oder chemischen Eigenschaften der erfindungsgemäßen Produkte oder bei den erfindungsgemäßen Herstellungsverfahren auftreten.

Das in der Praxis zu wählende Verhältnis hängt in erster Linie von der vorgesehenen Verwendung des jeweiligen Copolykondensates und den hierfür erforderlichen chemischen und physikalischen Eigenschaften ab, also z.B. davon, ob eine hohe Dichte an funktionellen Gruppen nach Formel (11) gewünscht wird oder nicht.

Die monomeren Bausteine der geformten QrganosiloxanaminCopolykondensate sind prinzipiell bekannte Verbindungen, beispielsweise der Formeln 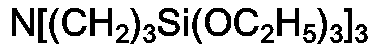 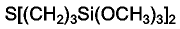 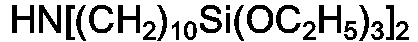 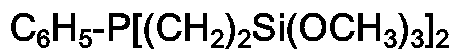 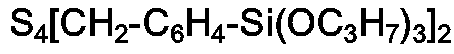 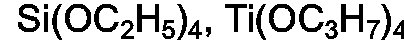 (Einfügung aus Seite 4 a)

Die Zusammensetzung der daraus erhältlichen Polymereinheiten läßt sich durch die Formeln 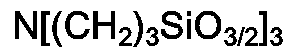 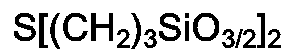 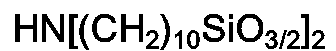 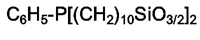 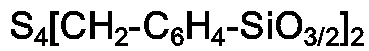 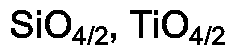 beschreiben.

Die geformten Copolykondensate können selbst bei gleicher chemischer Zusammensetzung in völlig unterschiedlicher Form als sog. statistisches Copolykondensat ("Random-Copolykondensat") oder als Block-Copolykondensat oder auch als sog. gemischtes Copolykondensat vorliegen (Anspruch 2). Erfindungsgemäß können die geformten Copolykondensate bei Praktizierung erfindungsgemäßer Formungsverfahren in bezug auf die Einheiten nach Formeln (I), (11) und (IV) in jeder der drei genannten Formen vorliegen. Dies bedeutet, daß im Falle eines rein statistischen Copolykondensates, das Einheiten nach Formel (I) und (11) und gegebenenfalls auch Einheiten nach Formel (IV) enthält, eine statistische Verteilung der Komponenten entsprechend der (N,N'-disubstituierte und N,N,N'-/N,N',N'-trisubstituierte organyloxysilyl-funktionelle Thioharnstoffe, die zusätzlich eine tertiäre Aminfunktion aufweisen, sind in der parallel eingereichten DE-A-39 25 356 bezüglich Stoff und Herstellungsmöglichkeiten beschrieben).
molaren Verhältnisse derAusgangsprodukte unter Berücksichtigung der im Fall der Einheiten (I) und (II)jeweils vorhandenen Siliciumgruppierungen nach Formel (111) und der Funktionalität der Vernetzergruppierung (IV) gegeben ist. Im Falle eines sog.
Block-Copolykondensates liegt eine Bildung von Blöcken gleicher Einheiten nach Formel (I) und (11) und gegebenenfalls (IV) vor. Schließlich weist ein sog. gemischtes Copolykondensat sowohl Strukturen eines statistischen Copolykondensates als auch eines Block-Copolykondensates auf. Dabei können die Einheiten nach Formel (I) oder Formel (11) oder Formel (IV) sowohl als statistisches als auch als Block-Copolykondensat vorliegen.

Besondere Vorteile bezüglich der Verfügbarkeit der Ausgangsmaterialien und der stofflichen Eigenschaften werden mit Copolymeren gemäß Anspruch 3 erreicht.

Gegenstand der Erfindung sind auch die in den Ansprüchen 4 bis 17 angegebenen Verfahren zur Herstellung der erfindungsgemäßen Copolykondensate. Ein Verfahren, nach dem statistische Copolykondensate in Kugelform erhalten werden können, ist in Anspruch 4 angegeben.

Prinzipiell können als Ausgangsstoffe für das Verfahren anstelle der Alkoxysilylaminverbindungen auch die entsprechenden Halogenid- oder Phenoxyverbindungen eingesetztwerden, doch bietet deren Verwendung keine Vorteile, sondern kann z. B. im Fall der Chloride, Schwierigkeiten durch die bei der Hydrolyse freiwerdende Salzsäure verursachen.

Die Hydrolyse von Ausgangsstoff und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse angewandt werden (Anspruch 5). Anstelle von Alkoholen können auch andere polare Lösungsmittel, die weitgehend wassermischbar sind, eingesetzt werden, doch erweist sich dies aus verfahrenstechnischen Gründen wegen der mit dem hydrolytisch abgespaltenen Alkohol zustandekommenden Lösungsmittelgemische als wenig sinnvoll.

Bevorzugt führt man die Hydrolyse mit einem Überschuß an Wasser über die stöchiometrisch erforderliche Menge durch (Anspruch 6). Die zur Hydrolyse benötigte Menge Wasser hängt von der Hydrolysegeschwindigkeit des jeweils verwendeten Aminoorganosilans bzw. des Vernetzers derart ab, daß mit zunehmender Menge Wasser raschere Hydrolyse erfolgt; allerdings kann eine Obergrenze durch auftretende Entmischung und Ausbildung eines Zweiphasensystems vorgegeben sein. Grundsätzlich ist eine Hydrolyse in homogener Lösung vorzuziehen. Aufgrund der genannten beiden Aspekte wird in praxi gewichtsmäßig etwas weniger Wasser verwendet als Organosilane zuzüglich Vernetzer.

Die Dauer der Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium-, Aluminium-ständigen Alkoxygruppen ab, wobei die Methoxygruppe am schnellsten hydrolysiert und mit steigender Kettenlänge des Kohlenwasserstoffrests eine Verlangsamung eintritt. Daneben hängt die Dauer des Gesamtvorganges Hydrolyse und Polykondensation auch von der Basizität des Aminoorganosilans ab. Amine fungieren bekanntlich als Kondensationsbeschleuniger, indem sie eine Autokatalyse bewirken. Hydrolyse und Polykondensation können daher durch Zusatz von Basen, vorzugsweise von Ammoniak, oder von anorganischen oder organischen Säuren, aber auch von üblichen Kondensationskatalysatoren, wie Dibutylzinndiacetat, beschleunigt werden.

Das Erfordernis, den in Lösungsmittel gelösten und mit Wasser vernetzten Ausgangsstoff unter Weiterrühren auf einer bestimmten Temperatur zu halten, resultiert daher, daß die Geschwindigkeit der sich durch Gelierung anzeigenden Polykondensation temperaturabhängig ist.

Die in der Hydrolyse- bzw. Gelierphase anzuwendende Temperatur wird im Einzelfall empirisch festgelegt. Es wird dabei darauf geachtet, daß für den darauffolgenden nächsten Verfahrensschritt die sog. Formungsphase, eine Feststoff-freie, flüssigkeitsdurchsetzte geleeartige Masse erhalten bleibt.

Die mit der Überführung der kohärenten flüssigkeitsdurchsetzten gelartigen Masse (in der die Kondensationsreaktion weiterfortschreitet) in separate sphärische Teilchen einhergehende Formungsphase beginnt mit dem Versetzen der (an)gelierten Reaktionsmischung mit einem weitgehend wasserunlöslichen, aber die Reaktionsmischung ausreichend lösenden Lösungsmittel in der vorgesehenen Menge.

Geeignete Lösungsmittel sind z. B. lineare oder verzweigte Alkohole mit4 bis 18 C-Atomen oder Phenole, lineare oder verzweigte symmetrische oder unsymmetrische Dialkylether sowie Di- oder Triether (wie Ethylenglycoldimethylether), chlorierte oder fluorierte Kohlenwasserstoffe,-mit einer oder mehreren Alkylgruppen substituierte Aromaten oder Aromatengemische, wie z. B. Toluol oder Xylol, weitgehend mit Wasser nicht mischbare symmetrische und unsymmetrische Ketone.

Bevorzugt wird der (an)gelierten Reaktionsmischung jedoch ein linearer oder verzweigter Alkohol mit 4 bis 12 C-Atomen, Toluol oder o-, m-, p-Xylol, eineln oder im Gemisch, zugesetzt (Anspruch 7).

Dieser Lösungsmittelzusatz bewirkt nach der Homogenisierung mit der Reaktionsmischung eine Verdünnung und damit eine deutliche Verlangsamung der mit Viskositätszunahme einhergehenden Kondensationsreaktion.

Die Bemessung der Menge dieses in der Formungsphase verwendeten Lösungsmittels hängt insbesondere davon ab. welche Korngröße jeweils für die geformte Organosiloxanaminverbindung angestrebt wird. Als Faustregel kann gelten, daß für grobes Korn (= Kugeln von größerem Durchmesser) wenig, für feines Korn (Kugeln von kleinerem Durchmesser) viel Lösungsmittel zu verwenden ist.

Einfluß auf die Korngroße nimmt darüber hinaus auch die Intensität, mit der das viskose Homogenisat aus Reaktionsmischung und weitgehend wasserunlöslichem Lösungsmittel in dem in der Formungsphase als Dispersionsmittel zugesetzten weiteren Wasser dispergiert wird. Durch starkes Rühren wird regelmäßig die Ausbildung eines feineren Korns begünstigt. Zur Stabilisierung der wäßrigen Dispersion der (jetzt Siloxan enthaltenden) organischen Phase kann eines der bekannten Dispergierhilfsmittel, wie langkettige Carbonsäuren oder deren Salze oder Polyalkylenglycole in üblichen Konzentrationen verwendet werden.

Nach einer Variante des erfindungsgemäßen Verfahrens wird ein Teil oder auch die Gesamtmenge des bei oder nach Gelierungsbeginn zuzusetzenden, weitgehend wasserunlöslichen Lösungsmittels schon in der Hydrolysestufe neben dem dort verwendeten Lösungsmittel eingesetzt (Anspruch 8). Bei Teilzugabe wird der Rest nach Gelierungsbeginn zugesetzt.

Im Extremfall der Zugabe der Gesamtmenge kann das Dispersionsmittel Wasser bei oder nach Gelierungsbeginn zugesetzt werden. Diese Variante wird dann bevorzugt angewendet, wenn das eingesetzte Organosilan- und gegebenenfalls Vernetzergemisch außerordentlich hohe Hydrolyse- und Polykondensationsneigung zeigt.

Die bevorzugte Temperatur, bei der die Dispergierung der Siloxan-enthaltenden organischen Phase in der wäßrigen Phase durchgeführt und aus der dispersen Phase kugelförmiger Feststoff gebildet wird, ist in der Regel die Rückflußtemperatur der Gesamtmischung. Grundsätzlich können aber dieselben Temperaturen wie in der Gelierstufe angewandt werden. Die Gesamtdauer von Dispergierungsstufe und Nachreaktion beträgt in der Regel 0,5 bis 10 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden (Anspruch 9).

Bei der Herstellung der erfindungsgemäß geformten vernetzten oder unvernetzten Organosiloxanamine kann, was auch abhängig von der Art der Alkoxygruppen ist, der Fall eintreten, daß eine oder mehrere Komponenten der zu gelierenden Mischung ein unterschiedliches Hydrolyse- und Polykondensationsverhalten besitzt. In diesem Fall sieht eine Ausgestaltung des erfindungsgemäßen Verfahrens vor, den oder die Vernetzer (VIII) und/oderdas organofunktionelle Silan (VI) nicht gemeinsam mit dem Aminoorganosilan (V) der Gelierung zu unterwerfen, sondern das Aminoorganosilan gegebenenfalls zusammen mit dem Vernetzer (VIII) oder dem Organosilan (VI) zunächst separat zu gelieren, mit dem weitgehend wasserunlöslichen Lösungsmittel zu homogenisieren und erst dann den oder die Vernetzer oder das Organosilan dem Homogenisat zuzusetzen (Anspruch 10).

Es können aber auch dem gelierten Aminoorganosilan und gegebenenfalls Vernetzer oder Organosilan gleichzeitig das Lösungsmittel und die noch fehlende Silankomponente zugegeben werden.

Die Abtrennung des kugelig geformten feuchten Produkts von dem flüssigen Dispersionsmittel kann durch übliche Maßnahmen, wie Dekantieren, Abfiltrieren oderZentrifugieren erfolgen.

Man kann dazu aber auch die flüssige Phase aus dem Reaktor entfernen, den verbleibenden Feststoff darin ein- oder mehrmals mit einem niedrigsiedenden Extraktionsmittel, bevorzugt einem niedrigsiedenden Alkohol, behandeln, um durch zumindest teilweisen Austausch des meist relativ hochsiedenden Lösungsmittels der Formungsphase gegen das niedrigsiedende Extraktionsmittel die spätere Trocknung des geformten Materials zu erleichtern.

Die Trocknung kann grundsätzlich bei Raumtemperatur bis 250° C, gegebenenfalls unter Schutzgas oder im Vakuum, durchgeführt werden. Zur Härtung und Stabilisierung kann der getrocknete geformte Feststoff bei Temperaturen von 150 bis 300° C getempert werden.

Das getrocknete bzw. getemperte Produkt kann in üblichen Vorrichtungen in verschiedene Korngrößenfraktionen klassifiziert werden. Von den Aufarbeitungsmaßnahmen Extraktion, Trocknung, Temperung und Klassifizierung kann, je nach den Umständen, die eine oder andere entfallen. Eine Klassifikaticmn kann an flüssigkeitsfeuchtem, getrocknetem oder getempertem Produkt durchgeführt werden.

Um ein unterschiedliches Hydrolyse- und Polykondensationsverhalten der monomeren Komponenten eines statistischen, gegebenenfalls vernetzten Copolykondensates auszugleichen, können nach der in Anspruch 11 angegebenen Herstellungsvariante die monomeren Komponenten nach Formel (V) und (VI) und der oder die gegebenenfalls vorhandenen Vernetzer nach Formel (VIII) zunächst vorkondensiert werden. Hierzu wird das Aminosilan nach Formel (V), die Monomerkomponente nach Formel (VI) und der oder die Vernetzer nach Formel (VIII) ohne oder unter Verwendung eines die Monomerkomponenten lösenden Lösungsmittels, bevorzugt unterVerwendung eines zu den Alkoxygruppen korrespondierenden Alkohols mit 1 bis 5 C-Atomen, in Gegenwart einer nicht zur vollständigen Hydrolyse ausreichenden Menge Wasser, vorzugsweise von 1 bis 100 Mol% der hierzu benötigten Menge, über einen Zeitraum von 5 Min. bis zu 48 Stunden bei Raumtemperatur bis 200° C vorkondensiert. Um diesen Vorkondensationseffekt zu begünstigen kann dabei, zusätzlich zu dem vorhandenen Aminoorganosilan, noch ein weiterer Kondensationskatalysator, wie z. B. eine anorganische oder organische Säure oder Base oder ein Metall-haltiger Kondensationskatalysator, wie beispielsweise Dibutylzinndiacetat, zugesetzt werden bevorzugt wird Ammoniak verwendet (Anspruch 12). Nach erfolgter Vorkondensation wird die vollständige Hydrolyse und Polykondensation wie beschrieben durchgeführt.

Nach einer anderen erfindungsgemäßen Verfahrensvariante werden sog. Block-Copolykondensate erhalten, bei denen eine Bildung von Blöcken gleicher Einheiten nach Formel (I) und (11) und gegebenenfalls einer oder mehrerer Einheiten nach Formel (IV) vorliegt. Dieses Verfahren ist im Anspruch 13 angegeben.

Die dabei durchzuführende Vorkondensation kann ebenfalls durch den Zusatz einer geringen Menge eines sauren oder basischen oder auch eines Metall-haltigen Kondensationskatalysators beschleunigt werden; bevorzugt wird Ammoniak verwendet (Anspruch 14.) Die Menge Wasser, die zur Vorkondensation verwendet wird, hängt davon ab, welcher Oligomerisierungsgrad, d. h. welche Blockgröße erreicht werden soll. Bei Einsatz von mehr Wasser zur Vorkondensation entstehen natürlich größere Einheiten als bei Verwendung von weniger Wasser. Die Dauer der Vorkondensation hängt, wie bereits vorstehend beschrieben, generell von der Hydrolysebereitschaft der monomeren Komponenten und der Temperatur ab.

Nach einer weiteren erfindungsgemäßen Verfahrensvariante werden sog. gemischte Copolykondensate erhalten, bei denen teilweise eine Bildung von Blöcken gleicher Einheiten nach Formel (I) und/oder Formel (11) und/oder einer oder mehrerer Einheiten nach Formel (IV) vorliegt, bei denen stets jedoch mindestens eine monomere Komponente nicht vorkondensiert und mindestens eine monomere Komponente vorkondensiert wird. Dieses Verfahren ist im Anspruch 15 angegeben. Es sieht vor, daß man von den vorgesehenen Monomeren der allgemeinen Formeln (V), (VI) und gegebenenfalls (VIII) mindestens ein Monomer oder mehrere Monomere voneinander unabhängig wie vorstehend beschrieben vorkondensiert und anschließend mit dem oder den verbleibenden, nicht vorkondensierten Monomeren vereinigt und dann nach Zusatz weiteren Wassers sowie gegebenenfalls weiteren Lösungsmittels die vollständige Hydrolyse und Polykondensation der Gesamtmischung vollzieht. Die weitere Behandlung des dabei gebildeten Polykondensates gestaltet sich dann wie bei den anderen beschriebenen Verfahren.

Eine besonders wichtige Ausführungsform der erfindungsgemäßen Verfahren sieht vor, das noch Lösungsmittel- und wasserfeuchte bzw. -nasse kugelförmige Material einer Temperaturbehandlung während 1 Stunde bis zu einer Woche bei Temperaturen von 50 - 300° C, vorzugsweise 100 - 200° C zu unterwerfen, wobei bedarfsweise Überdruck angewendet wird.

Diese Behandlung unter "dämpfenden" bzw. digerierenden Bedingungen dient ebenfalls überwiegend einer Verbesserung der mechanischen Festigkeit und der Porosität des geformten Materials und kann auch in der zuletzt vorliegenden, eine flüssige und die feste Produktphase enthaltenden Dispersion des Herstellungsganges oder in Wasser allein durchgeführt werden.

Die vorstehend beschriebene Ausführungsform einer Nachbehandlung der erhaltenen, aber nicht getrockneten geformten Organosiloxan-Copolykondensate besteht also darin, den in Form von Kugeln ausgebildeten Feststoff in Anwesenheit mindestens der Komponente Wasser bzw. der im Herstellungsgang zuletzt vorliegenden flüssigen Phase als Dampf oder Flüssigkeit, einer Temperaturbehandlung während 1 Stunde bis zu einer Woche bei Temperaturen von 50 - 300° C, vorzugsweise 100 - 200° C, gegebenenfalls unter Überdruck, zu unterwerfen (Anspruch 16). Dabei kann die Anwesenheit eines sauren, basischen oder Metall-haltigen Katalysators von Vorteil sein. Eine besonders vorteilhafte Ausführungsform sieht die Verwendung von Ammoniak vor (Anspruch 17).

Charakterisiert sind die neuen geformten Organosiloxanamin-Copolykondensate insbesondere anhand der quantitativen Hydrolyseausbeuten, der Elementaranalysen und durch die Bestimmung der einzelnen Funktionalitäten. Zwischen den nach den unterschiedlichen Herstellungsverfahren erhaltenen Copolykondensaten besteht rein optisch kein Unterschied. Je nach Vorbehandlung besitzen die kugelig geformten erfindungsgemäßen Copolykondensate einen Teilchendurchmesser von 0,01 bis 3,0, vorzugsweise 0,05 bis 2,0 mm, eine spezifische Oberfläche von bis zu 1000 m²/g, vorzugsweise bis zu 700 m²/g ein spezifisches Porenvolumen von bis zu 6,0 ml/g und eine Schüttdichte von 50 bis 1000 g/I, vorzugsweise 100 bis 800 g/I. Die einstellbaren Porendurchmesser liegen im Bereich bis über 1000 nm.

Die chemische Stabilität der geformten Produkte ist mit denen der ungeformten Produkte vergleichbar, d. h. in Abhängigkeit von den einzelnen Funktionalitäten liegen sie an der Luft bei deutlich über 150⁰ C und unter Schutzgasatmosphäre bei über 200° C.

Neben der generellen Verwendbarkeit der geformten Copolykondensate als Wirkstoffträger im breitesten Sinne besteht ein weiterer Gegenstand der Erfindung in der Verwendung von Copolykondensaten, in denen X für die komplexierenden Gruppen 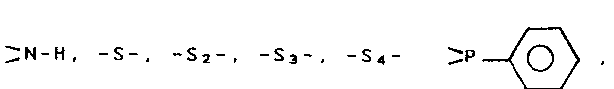 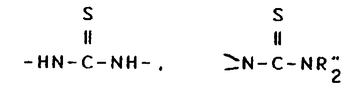 steht, zur Entfernung von gelösten Metallen aus einer flüssigen wäßrigen oder organischen Phase nach dem statischen oder dynamischen Prinzip (Anspruch 18).

Eine Verwendbarkeit aller erfindungsgemäßen Copolykondensate ist der Einsatz zur adsorptiven Bindung von gasförmigen organischen Verbindungen und/oder von Wasserdampf, vorzugsweise von organischen Lösungsmitteln (Anspruch 19).

Entscheidend für diese Tätigkeit zur Adsorption sind vor allem das spezifische Porenvolumen, der Porendurchmesser und die Oberflächeneigenschaften.

## Patentansprüche

1. Geformte Organosiloxan-Copolykondensate in Form makroskopisch kugelförmiger Teilchen mit einem Durchmesser von 0,01 bis 3,0 mm, einer spezifischen Oberfläche bis zu 1000 m²/g, einem spezifischen Porenvolumen bis zu 6,0 ml/g sowie einer Schüttdichte von 50 bis 1000 g/I, aus Einheiten der Formel 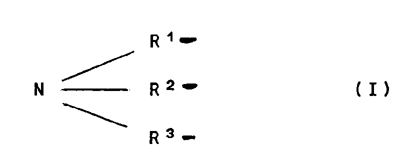 und aus Einhelten der Formel 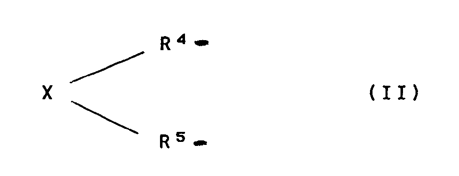 wobei R¹ bis R⁵ gleich oder verschieden sind und eine Gruppe der allgemeinen Formel 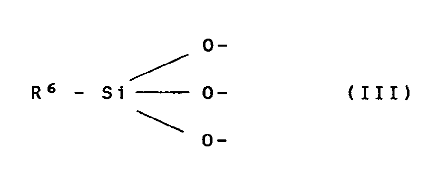 bedeuten, wobei R⁶ direkt an das Stickstoffatom bzw. den zweibindigen Rest X gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel 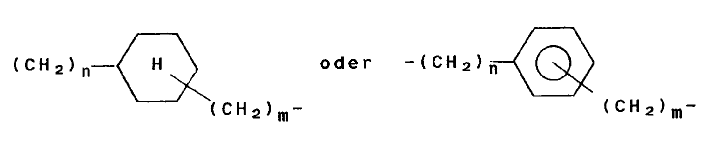 darstellt, in der n eine Zahl von 1 bis 6 ist und die Zahl stickstoffständiger bzw. X-ständiger Methylengruppen angibt und m eine Zahl von 0 bis 6 ist,
wobei die freien Valenzen der an das Siliciumatom gebundenen Sauerstoffatome wie bei Kieselsäuregerüsten durch Siliciumatome weiterer Gruppen der Formel (III) und/oderüberdie Metallatome in einem oder mehreren der vernetzenden Brückenglieder 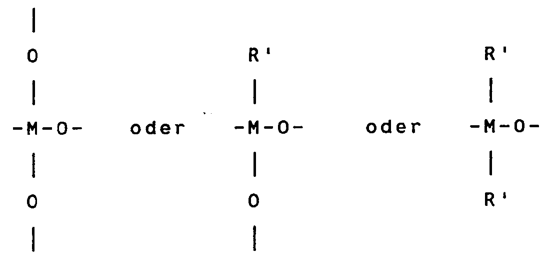 bzw. (IV) 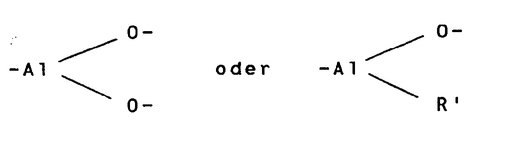 abgesättigt sind, M ein Silicium-, Titan- oder Zirkoniumatom und R' eine lineare oder verzweigte Alkylgruppe mit 1 bis 5 C-Atomen oder eine Phenylgruppe ist und das Verhältnis der Siliciumatome aus den Gruppen der allgemeinen Formel (III) zu den Metallatomen in den Brückengliedern (IV) 1 : 0 bis 1 : 20 beträgt und in Formel (11) 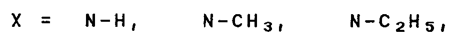 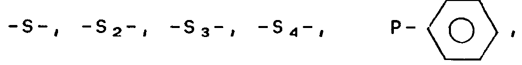 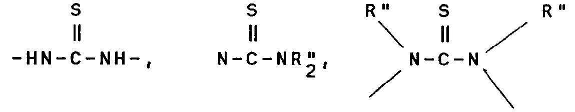 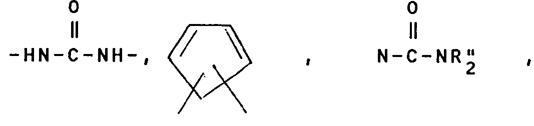 steht, wobei R" gleich H oder eine lineare oder verzweigte Alkylgruppe mit 1 bis 5 C-Atomen oder eine Gruppe (CH₂)ₙ-NR₂ ist, wobei n eine Zahl von 1 bis 6 bedeutet und R" dieselbe Bedeutung wie R" hat, wobei das Verhältnis von Einheiten nach Formel (I) zu Einheiten nach Formel (11) von 0,03 : 99,97 bis 99,99 : 0,01 Mol% beträgt.

2. Geformte Organosiloxan-Copolykondensate gemäß Anspruch 1,
dadurch gekennzeichnet,
daß sie als sog. statistische Copolykondensate, Block-Copolykondensate oder als gemischte Copolykondensate vorliegen.

3. Geformte Organosiloxan-Copolykondensate gemäß Anspruch 1 oder 2,
dadurch gekennzeichnet,
daß R¹ bis R⁵ für eine Gruppe der allgemeinen Formel 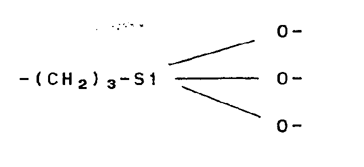 stehen.

4. Verfahren zur Herstellung von geformten statistischen Organosiloxanamin-Copolykondensaten gemäß Ansprüchen 1 bis 3,
dadurch gekennzeichnet,
daß man ein tertiäres Aminoorganosilan der allgemeinen Formel 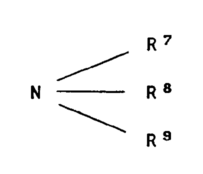 zusammen mit einem organofunktionellen Silan 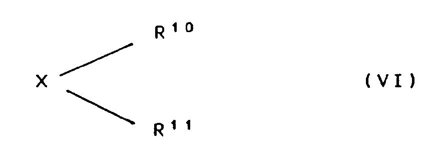 entsprechend der gewünschten stöchiometrischen Zusammensetzung des herzustellenden Copolykondensates, wobei R⁷ bis R11 gleich oder verschieden sind und eine Gruppe der allgemeinen Formel 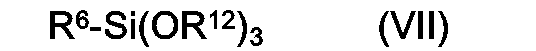 bedeuten,
R⁶ dieselbe Bedeutung wie in Formel (111) hat,
R¹² eine lineare oder verzweigte Alkylgruppe mit 1 bis 5 C-Atomen bedeutet und
X dieselbe Bedeutung wie in Formel (11) hat, gegebenenfalls nach Zusatz eines oder mehrerer Vernetzer der allgemeinen Formel 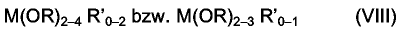 wobei M ein Silicium-, Titan-, Zirkon- oder Aluminiumatom,
R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Vernetzern (VIII) 1 : 0 bis 1 : 20 beträgt,
in einem weitgehend wassermischbaren, aber Aminoorganosilan nach Formel (V) und organofunktionelles Silan nach Formel (VI) sowie Vernetzer nach Formel (VIII) lösenden Lösungsmittel auflöst und der Lösung unter Rühren eine zumindest für die vollständige Hydrolyse und Kondensation ausreichenden Menge Wasser zufügt, dann das Reaktionsgemisch unter Weiterrühren bei einer bestimmten Temperatur im Bereich von Raumtemperatur bis 200° C unter der Maßgabe gelieren läßt, daß es bei Gelierungsbeginn oder bis zu einer Stunde danach mit 10 bis 2000, vorzugsweise 50 bis 500 Gew.%, bezogen auf die Gesamtmenge von Aminoorganosilan (V), organofunktionellem Silan (VI) und gegebenenfalls Vernetzer (VIII), eines weitgehend wasserunlöslichen, aber die (an)gelierte Reaktionsmischung lösenden Lösungsmittels versetzt und homogenisiert wird,
dem viskosen Homogenisat sofort oder im Zeitraum bis zu 3 Stunden, gegebenenfalls unter Erhöhung der ursprünglich eingestellten Temperatur, 10 bis 2000, vorzugsweise 50 bis 500 Gew.%, bezogen auf die Gesamtmenge von Aminoorganosilan (V), organofunktionellem Silan (VI) und gegebenenfalls Vernetzer (VIII), Wasser zugibt, die jetzt Siloxan-enthaltende organische Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 250° C, gegebenenfalls unter Schutzgas oder im Vakuum trocknet und 1 bis 100 Stunden bei Temperaturen von 150° C bis 300° C tempert und/oder klassifiziert.

5. Verfahren gemäß Anspruch 4,
dadurch gekennzeichnet,
daß als Lösungsmittel bei der Hydrolyse Methanol, Ethanol, n- und i-Propanol, n- und i-Butanol oder n-Pentanol, allein oder in Mischung, verwendet wird.

6. Verfahren nach Anspruch 4 oder 5,
dadurch gekennzeichnet,
daß man die Hydrolyse mit Wasserüberschuß durchführt.

7. Verfahren nach einem oder mehreren der Ansprüche 4 bis 6,
dadurch gekennzeichnet,
daß der (an)gelierten Reaktionsmischung ein linearer oder verzweigter Alkohol mit 4 bis 12 C-Atomen, Toluol oder o-, m-, p-Xylol, einzeln oder im Gemisch, zugesetzt wird.

8. Verfahren nach einem oder mehreren der Ansprüche 4 bis 7,
dadurch gekennzeichnet,
daß ein Teil oder auch die Gesamtmenge des bei oder nach Gelierungsbeginn zuzusetzenden, weitgehend wasserunlöslichen Lösungsmittels schon in der Hydrolysestufe neben dem dort verwendeten Lösungsmittel eingesetzt wird.

9. Verfahren nach einem oder mehreren der Ansprüche 4 bis 8,
dadurch gekennzeichnet,
daß man Gelierung und Formung bei Normaldruck oder einem Überdruck, welcher der Summe der Partialdrucke der Komponenten der Reaktionsmischung bei der jeweils angewandten Temperatur entspricht, durchführt.

10. Verfahren nach einem oder mehreren der Ansprüche 4 bis 9,
dadurch gekennzeichnet,
daß man das Aminoorganosilan nach Formel (V) allein oder zusammen mit dem Vernetzer (VIII) und/oder dem organofunktionellen Silan (VI) separat geliert, mit dem weitgehend wasserunlöslichen Lösungsmittel homogenisiert und erst dann die noch fehlenden Komponenten für das Copolykondensat dem Homogenisat zusetzt.

11. Verfahren nach einem oder mehreren der Ansprüche 4 bis 9,
dadurch gekennzeichnet,
daß man zur Gewinnung geformter statistischer Copolykondensate das Aminoorganosilan gemäß Formel (V), das organofunktionelle Silan (VI) und den oder die Vernetzer nach Formel (VIII) über einen Zeitraum von 5 Min. bis zu 48 Stunden ohne oder unter Verwendung eines die Monomerkomponenten lösenden Lösungsmittels, bevorzugt unter Verwendung eines zu den Alkoxygruppen korrespondierenden Alkohols mit 1 bis 5 C-Atomen, in Gegenwart einer nicht zur vollständigen Hydrolyse ausreichenden Menge Wasser, vorzugsweise von 1 bis 100 Mol% der hierzu benötigten Menge, bei Raumtemperatur bis 200° C vorkondensiert und dann nach Zusatz weiteren Wassers und gegebenenfalls weiteren Lösungsmittels weiter wie nach Anspruch 5 verfährt.

12. Verfahren gemäß Anspruch 11,
dadurch gekennzeichnet,
daß die Vorkondensation in Gegenwart eines sauren, basischen oder metallhaltigen Kondensationskatalysators, vorzugsweise in Gegenwart von Ammoniak, durchgeführt wird.

13. Verfahren zur Herstellung von geformten Block-Copolykondensaten gemäß Ansprüchen 1 bis 3,
dadurch gekennzeichnet,
daß man ein tertiäres Aminoorganosilan der allgemeinen Formel (V) und ein organofunktionelles Silan der Formel (VI), wobei R⁷ bis R11 sowie X den Bedeutungsumfang wie in Anspruch 5 haben, und gegebenenfalls einen oder mehrere Vernetzer der allgemeinen Formel (VIII), jeweils unabhängig voneinander, ohne oder unter Verwendung eines Lösungsmittels, in Gegenwart einer nicht zur vollständigen Hydrolyse ausreichenden Menge Wasser, vorzugsweise in Gegenwart von 1 bis 100 Mol% der hierzug benötigten Menge, über einen Zeitraum von 5 Min. bis zu 48 Stunden bei Raumtemperatur bis 200° C zunächst vorkondensiert und anschließend vereinigt und dann nach Zusatz weiteren Wassers und gegebenenfalls weiteren Lösungsmittels, so daß mindestens die für eine vollständige Hydrolyse und Polykondensation stöchiometrisch erforderliche Menge Wasser anwesend ist, die vollständige Hydrolyse und Polkondensation durchführt.

14. Verfahren gemäß Anspruch 13,
dadurch gekennzeichnet,
daß die Vorkondensation in Gegenwart eines sauren, basischen oder metallhaltigen Kondensationskatalysators, vorzugsweise in Gegenwart von Ammoniak, durchgeführt wird.

15. Verfahren zur Herstellung von geformten gemischten Copolykondensaten gemäß Ansprüchen 1 bis 3,
dadurch gekennzeichnet,
daß man von den vorgesehenen monomeren Komponenten nach Formel (V), (VI) und (VIII) mindestens eine voneinander unabhängig 5 Min. bis 48 Stunden ohne oder unter Verwendung eines Lösungsmittels, in Gegenwart einer nicht zur vollständigen Hydrolyse ausreichenden Menge Wasser, vorzugsweise in Gegenwart von 1 bis 100 Mol% der hierzu benötigten Menge, bei Raumtemperatur bis 200° C vorkondensiert und dann mit dem bzw. den nicht vorkondensierten Monomeren vereinigt und schließlich nach Zusatz weiteren Wassers und gegebenenfalls weiteren Lösungsmittels die vollständige Hydrolyse und Polykondensation gemäß Anspruch 5 durchführt.

16. Verfahren zur Nachbehandlung der nach einem oder mehreren der Ansprüche 4 bis 15 erhaltenen, aber nicht getrockneten geformten Organosiloxan-Copolykondensate,
dadurch gekennzeichnet,
daß der in Form von Kugeln ausgebildete Feststoff in Anwesenheit mindestens der Komponente Wasser in der flüssigen Phase einer Temperaturbehandlung während 1 Stunde bis zu einer Woche bei 50° C bis 300° C, vorzugsweise 100 bis 200° C, unterzogen wird, wobei bedarfsweise Überdruck angewendet wird.

17. Verfahren gemäß Anspruch 16,
dadurch gekennzeichnet,
daß die Nachbehandlung in Gegenwart eines sauren, basischen oder metallhaltigen Katalysators, vorzugsweise in Gegenwart von Ammoniak, durchgeführt wird.

18. Verwendung der erfindungsgemäßen geformten Organosiloxanamin-Copolykondensate gemäß den Ansprüchen 1 bis 3, bei denen X für 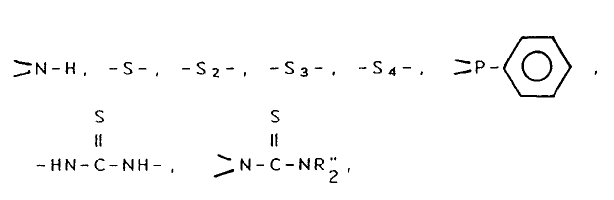 steht, wobei R" dieselbe Bedeutung wie in Anspruch 1 hat, zur Entfernung von gelösten Metallen aus wäßrigen oder organischen Lösungen nach dem statischen oder dynamischen Prinzip.

19. Verwendung der erfindungsgemäßen geformten Organosiloxanamin-Copolykondensate gemäß den Ansprüchen 1 bis 3 zur Adsorption von gasförmigen organischen Verbindungen und/odervon Wasserdampf, vorzugsweise zur Adsorption von organischen Lösungsmitteln.

## Claims

1. Shaped organosiloxane copolycondensates in the form of macroscopic spherical particles having a diameter from 0.01 to 3.0 mm, a specific surface area up to 1,000 m²/g, a specific pore volume up to 6.0 mi/g and a bulk density from 50 to 1,000 g/I, comprising units of the formula 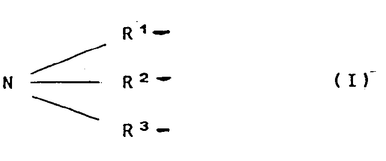 and comprising units of the formula 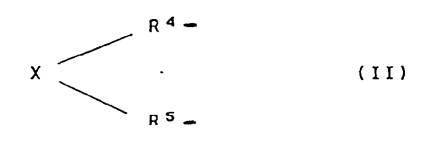 wherein R¹ to R⁵ are the same or different and denote a group of the general formula 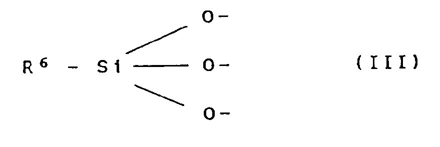 wherein R⁶ is bound directly to the nitrogen atom or the bivalent radical X, and is a linear or branched alkylene group having 1 to 10 C atoms, a cycloalkylene group having 5 to 8 C atoms or unit of the general formula 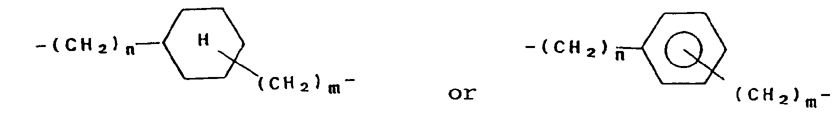 in which n is a number from 1 to 6 and indicates the number of nitrogen-position or X-position methylene groups, and m is a number from 0 to 6,
wherein the free valencies of the oxygen atoms bound to the silicon atom are saturated, as for silicic acid skeletons, by Silicon atoms of further groups of the formula (III) and/or via the metal atoms in one or more of the cross-linking bridge members 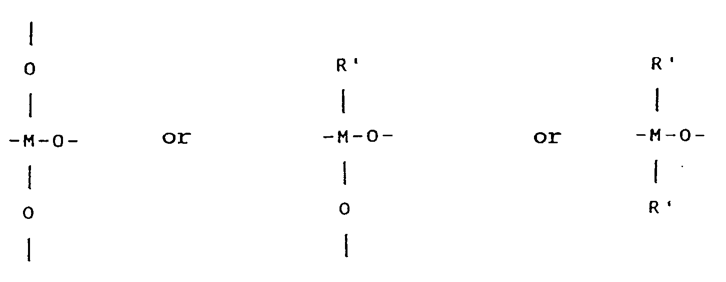 or 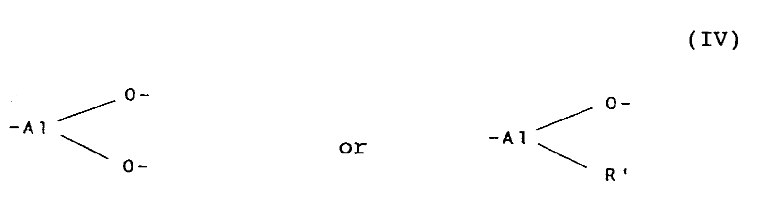 M is a silicon, titanium or zirconium atom and R' is a linear or branched alkyl group having 1 to 5 C atoms or a phenyl group, and the ratio of silicon atoms from the groups of the general formula (III) to the metal atoms in the bridge members (IV) is 1 : 0 to 1 : 20 and in formula (II) 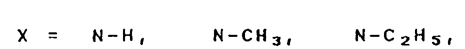 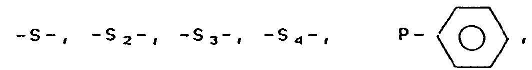 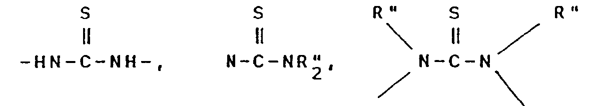 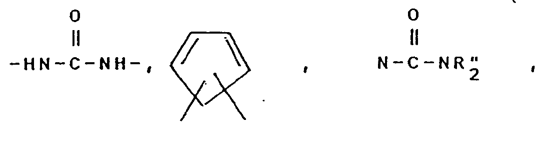 wherein R" is H or a linear or branched alkyl group having 1 to 5 C atoms or a group (CH₂)n NR"₂, wherein n denotes a number from 1 to 6 and R" has the same meaning as R",
wherein the ratio of units of the formula (I) to units of the formula (II) is from 0.03 : 99.97 to 99.99 : 0.01 mole %.

2. Shaped organosiloxane copolycondensates according to claim 1, characterized in that they exist as so- called random copolycondensates, block copolycondensates or as mixed copolycondensates.

3. Shaped organosiloxane copolycondensates according to claim 1 or 2, characterized in that R¹ to R⁵ represents a group of the general formula

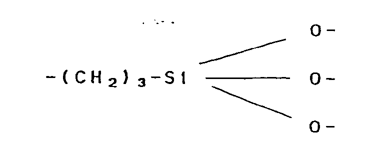

4. Process for producing shaped random organosiloxane amine copolycondensates according to claims 1 to 3, characterized in that a tertiary aminoorganosilane of the general formula 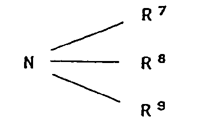 together with an organofunctional silane 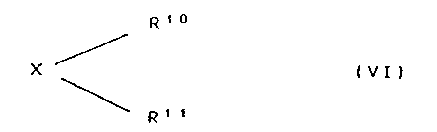 corresponding to the required stoichiometric composition of the copolycondensate to be produced, wherein R⁷ to R11 are the same or different and denote a group of the general formula
R⁶-Si(OR¹²)₃ (VII),
R⁶ has the same meaning as in formula (III), R¹² denotes a linear or branched alkyl group having 1 to 5 C atoms and X has the same meaning as in formula (II), optionally after adding one or more cross-linking agents of the general formula
M(OR)₂-₄ R'₀₋₂ or M(OR)₂₋₃ R'₀₋₁ (VIII)
wherein M is a silicon, titanium, zirconium or aluminium atom, R' is a linear or branched alkyl group having 1 to 5 C atoms or a phenyl group, and R denotes a linear or branched alkyl group having 1 to 5 C atoms, and the ratio of silicon atoms from the groups of the general formula (VII) to the metal atoms in the cross-linking agents (VIII) is 1 : 0 to 1 : 20, are dissolved in a largely water-miscible solvent but one which dissolves aminoorganosilane of the formula (V) and organofunctional silane of the formula (VI) and cross-linking agents of the formula (VIII), and an amount of water adequate at least for complete hydrolysis and condensation is added to the solution by stirring, the reaction mixture is then allowed to gel by further stirring at a specific temperature in the range from room temperature to 200°C with the proviso that at the start of gelation or up to one hour thereafter, 10 to 2000, preferably 50 to 500 wt.%, in relation to the total amount of aminoorganosilane (V), organofunctional silane (VI) and optionally cross-linking agents (VIII), of a largely water-insoluble solvent but one which dissolves the (partially) gelled reaction mixture is added and the mixture homogenised, 10 to 2000, preferably 50 to 500 wt.%, in relation to the total amount of aminoorganosilane (V), organofunctional silane (VI) and optionally cross-linking agents (VIII), of water are added to the viscous homogenisate immediately or in the period up to 3 hours, optionally while increasing the temperature originally set, the organic phase now containing siloxane is dispersed in the liquid two-phase system and the solid forming in the shape of balls after a reaction time which is adequate therefor at room temperature to 200°C is separated from the liquid phase and then optionally extracted, dried at room temperature to 250°C, optionally under protective gas or in a vacuum and tempered for 1 to 100 hours at temperatures from 150°C to 300°C and/or classified.

5. Process according to claim 4, characterized in that methanol, ethanol, n-propanol and i-propanol, n-butanol and i-butanol or n-pentanol, alone or mixed, is used as solvent for hydrolysis.

6. Process according to claim 4 or 5, characterized in that hydrolysis is carried out using excess water.

7. Process according to one or more of claims 4 to 6, characterized in that a linear or branched alcohol having 4 to 12 C atoms, toluene oro-xylene, m-xylene or p-xylene, individually or mixed, is added to the (partially) gelled reaction mixture.

8. Process according to one or more of claims 4 to 7, characterized in that some or even the total amount of the largely water-insoluble solvent to be added during or after the start of gelation is employed even at the hydrolysis stage in addition to the solvent used there.

9. Process according to one or more of claims 4 to 8, characterized in that gelation and shaping are carried out under normal pressure or excess pressure, which corresponds to the sum of the partial pressures of the components of the reaction mixture at the particular temperature used.

10. Process according to one or more of claims 4 to 9, characterized in that the aminoorganosilane of the formula (V) alone or together with the cross-linking agent (VIII) and/or the organofunctional silane (VI) is gelled separately, homogenised with the largely water-insoluble solvent and only then are the components still required for the copolycondensate added to the homogenisate.

11. Process according to one or more of claims 4 to 9, characterized in that in order to obtain shaped random copolycondensates, the aminoorganosilane according to formula (V), the organofunctional silane (VI) and the cross-linking agent or agents of the formula (VIII) are prepolycondensed over a period of 5 minutes up to 48 hours without or while using a solvent which dissolves the monomer components, preferably while using an alcohol corresponding to the alkoxy groups and having 1 to 5 C atoms, in the presence of an amount of water not adequate for complete hydrolysis, preferably from 1 to 100 mole % of the amount required therefor, at room temperature to 200°C, and then after adding furtherwaterand optionally further solvent, the procedure is followed as for claim 5.

12. Process according to claim 11, characterized in that the precondensation is carried out in the presence of an acid, basic or metal-containing condensation catalyst, preferably in the presence of ammonia.

13. Process for producing shaped block copolycondensates according to claims 1 to 3, characterized in that a tertiary aminoorganosilane of the general formula (V) and an organofunctional silane of the formula (VI), wherein R⁷ to R11 and X have the scope of meaning as in claim 5, and optionally one or more cross-linking agents of the general formula (VIII), are initially condensed in each case independently of one another, without or while using a solvent, in the presence of an amount of water not adequate for complete hydrolysis, preferably in the presence of 1 to 100 mole % of the amount required therefor, over a period of 5 minutes up to48 hours at room temperature to 200°C and subsequently combined, and then after adding further water and optionally further solvent, so that at least the stoichiometric amount of water required for complete hydrolysis and condensation is present, complete hydrolysis and condensation is carried out.

14. Process according to claim 13, characterized in that the precondensation is carried out in the presence of an acid, basic or metal-containing condensation catalyst, preferably in the presence of ammonia.

15. Process for producing shaped mixed copolycondensates according to claims 1 to 3, characterized in that at least one of the monomer components provided of the formula (V), (VI) and (VIII) is precondensed independently of one another for 5 minutes to 48 hours without or while using a solvent, in the presence of an amount of water not adequate for complete hydrolysis, preferably in the presence of 1 to 100 mole % of the amount required therefor, at room temperature to 200°C, and then combined with the non-precondensed monomer or monomers, and finally after adding further water and optionally further solvent, complete hydrolysis and condensation is carried out according to claim 5.

16. Process for after-treatment of the shaped organosiloxane copolycondensates obtained according to one or more of claims 4 to 15 but which are not dry, characterized in that the solid formed in the shape of balls is subjected to heat treatment for 1 hour up to one week at 50°C to 300°C, preferably 100 to 200°C, in the presence of at least the water component in the liquid phase, excess pressure being applied if required.

17. Process according to claim 16, characterized in that the after-treatment is carried out in the presence of an acid, basic or metal-containing catalyst, preferably in the presence of ammonia.

18. Use of the shaped organosiloxane amine copolycondensates of the invention according to claims 1 to 3, in which X represents 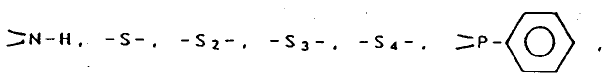 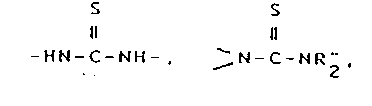 wherein R" has the same meaning as in claim 1, for removing dissolved metals from aqueous or organic solutions according to the static or dynamic principle.

19. Use of the shaped organosiloxane amine copolycondensates of the invention according to claims 1 to 3 for adsorbing gaseous organic compounds and/or water vapour, preferably for adsorbing organic solvents.

## Revendications

1. Copolycondensats d'organosiloxanes ayant une forme précise, sous forme de particules sphériques ma- croscopiquement ayant un diamètre de 0,01 à 3,0 mm, une surface spécifique allant jusqu'à 1 000 m²/g, un volume spécifique des pores allant jusqu'à 6,0 ml/g ainsi qu'une densité apparente de 50 à 1 000 g/I qui se composent d'unités de formule : 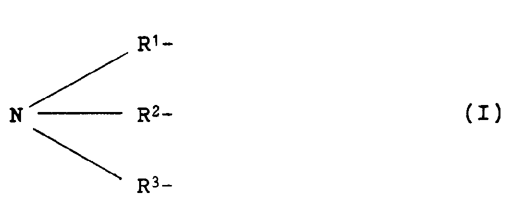 et d'unités de formules : 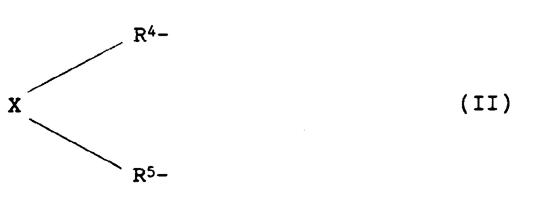 dans lesquelles R₁ et R₅ sont identiques ou différents, et représentent un groupe de formule générale : 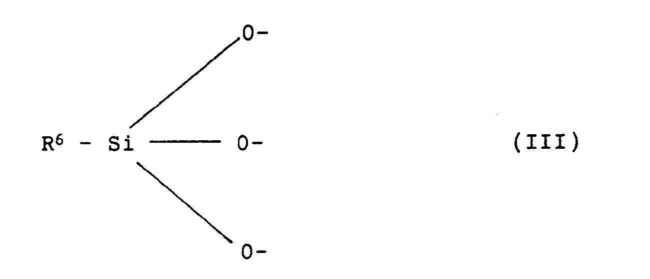 dans laquelle R₆ est relié directement à l'atome d'azote ou au radical à deux liaisons X et représente un radical alcoylène linéaire ou ramifié ayant de 1 à 10 atomes de carbone, un groupe cycloalcoylène ayant de 5 à 8 atomes de carbone, ou une unité de formule générale : 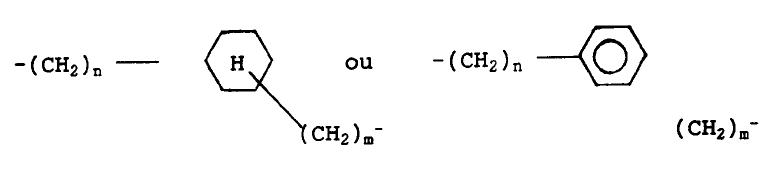 dans laquelle n est un nombre allant de 1 à 6 et indique le nombre des groupes méthylène fixés à l'azote ou fixés à X : et m est un nombre allant de 0 à 6 ; formule dans laquelle les valences libres de l'atome d'oxygène lié à l'atome de silicium comme dans le squelette de la silice sont désaturées par les atomes de silicium d'autres groupes de formule (III) et/ou par l'intermédiaire des atomes métalliques dans un ou plusieurs des éléments de pontage réticulants : 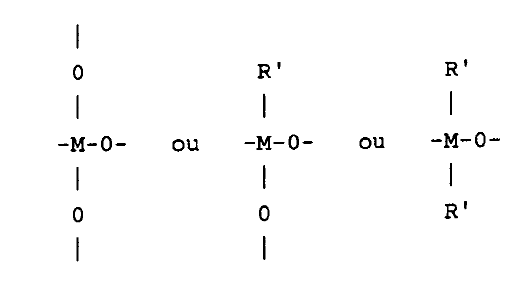 ou 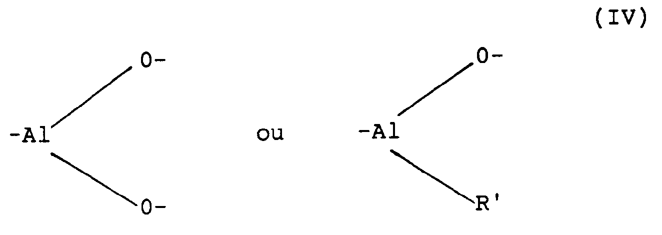 M est un atome de silicium, de titane ou de zirconium et R' un radical alcoyle linéaire ou ramifié, ayant de 1 à 5 atomes de carbone ou un radical phényle et le rapport des atomes de silicium provenant des radicaux de la formule générale (III) aux atomes de métal dans les éléments de pontage (IV) s'élève de 1 : 0 à 1 : 20 et dans la formule (II) :
X représente N-H, N-CH₃, N-C₂-H₅, -S-, -S₂-, -S₃- -S₄-, 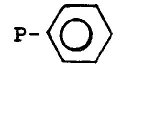 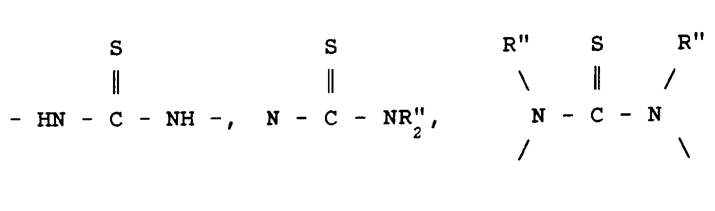 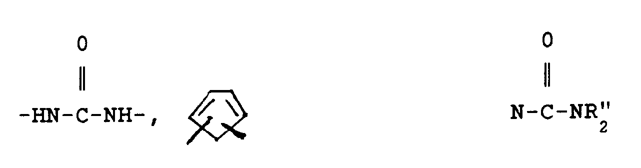 dans lesquels R" est égal à H ou forme un radical alcoyle linéaire ou ramifié, ayant de 1 à 5 atomes de carbone ou un radical (CH₂)ₙ -NR"₂, dans lequel n représente un nombre allant de 1 à 6 et, R" a la même signification que R", dans lequel le rapport entre les unités selon la formule (I) et les unités selon la formule (II) s'élève de 0,03 : 99,97 à 99,99 : 0,01 % molaire.

2. Copolycondensats d'organosiloxanes ayant une forme définie selon la revendication 1 caractérisés en ce qu'ils se présentent sous forme de copolycondensats dénommés "copolycondensats statiques", de copolycondensats en blocs ou de "copolycondensats mixtes".

3. Copolycondensats d'organosiloxanes ayant une forme définie selon les revendications 1 ou 2, caractérisés en ce que R₁ à R₅ représentent un groupe de formule générale :

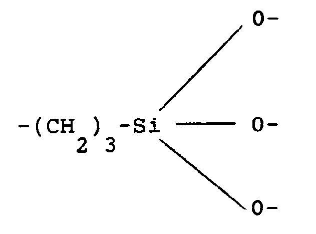

4. Procédé d'obtention de copolycondensats d'organosiloxanamines statistiques ayant une forme déterminée, selon les revendications 1 à 3, caractérisé en ce que l'on met en solution un aminoorganosilane tertiaire de formule générale : 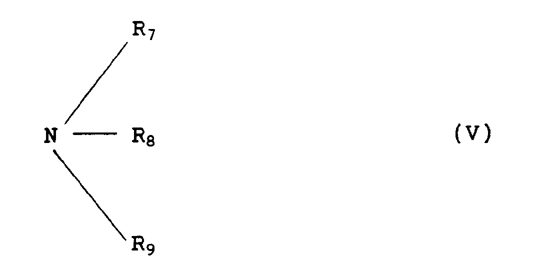 ensemble avec un silane organofonctionnel de formule : 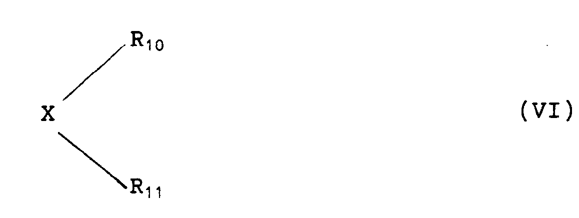 d'une manière correspondant à la composition stoechiométrique désirée du copolycondensat à préparer, formules dans lesquelles R₇ à R₁₁ sont identiques ou différents et désignent un radical de formule générale : 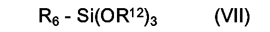 R₆ a la même signification que dans la formule (III), R₁₂ représente un radical alcoyle linéaire ou ramifié, ayant de 1 à 5 atomes de carbone et X a la même signification que dans la formule (II), le cas échéant après addition d'un ou plusieurs agents de réticulation de formule générale :
M(OR)2-4 R'₀₋₂ ou M(OR)₂₋₃ R'ₒ₋₁ (VIII)
dans laquelle M désigne un atome de silicium, de titane, de zirconium, ou d'aluminium, R' représente un radical alcoyle linéaire ou ramifié ayant de 1 à 5 atomes de carbone ou un radical phényle et R représente un radical alcoyle linéaire ou ramifié ayant de 1 à 5 atomes de carbone et le rapport des atomes de silicium des groupes de formule générale (VII) aux atomes de métal dans les agents de réticulation (VIII) s'élève de 1 : 0 à 1 : 20
dans un solvant largement miscible à l'eau mais qui dissout l'aminoorganosiloxane selon la formule (V), et le silane organofonctionnel selon la formule (VI) ainsi que l'agent de réticulation selon la formule (VIII) et que l'on ajoute à la solution, sous agitation, une quantité d'eau suffisante au moins pour l'hydrolyse complète et la condensation, puis qu'on laisse gélifier le mélange réactionnel sous agitation ultérieure à une température déterminée dans la zone allant de la température ambiante à 200°C avec la restriction que l'on mélange lors du début de la gélification ou jusqu'à une heure après, avec 10 à 2 000, de préférence de 50 à 500 % en poids, rapporté à la quantité totale d'aminoorganosilane (V), de silane organofonctionnel (VI) et le cas échéant d'agent de réticulation (VIII), d'un solvant largement insoluble dans l'eau mais qui dissout le mélange réactionnel gélifié et que l'on homogénéise, que l'on additionne l'homogé- néisat visqueux immédiatement ou dans l'espace de 3 heures, le cas échéant sous élévation de la température ajustée à l'origine, de 10 à 2 000, de préférence de 50 à 500 % en poids, rapporté à la quantité totale d'aminoorganosilane (V), de silane organofonctionnel (VI) et d'agent de réticulation (VIII) le cas échéant, d'eau qui disperse alors la phase organique contenant le siloxane dans le système liquide à deux phases et sépare la substance solide se formant sous forme de billes après un temps de réaction suffisant pour cela, à une température allant de la température ambiante à 200°C, de la phase liquide et ensuite que l'on extrait le cas échéant, que l'on sèche, le cas échéant sous gaz protecteur ou sous vide, à température ambiante jusqu'à 250°C, que l'on recuise pendant 1 à 100 heures à des températures allant de 150 à 300°C et/ou que l'on opère un classement.

5. Procédé selon la revendication 4, caractérisé en ce que l'on utilise comme solvant pour l'hydrolyse le méthanol, l'éthanol, le n- et l'i-propanol, le n- et l'i-butanol ou le n-pentanol seuls ou en mélange.

6. Procédé selon la revendication 4 ou 5, caractérisé en ce que l'on effectuer l'hydrolyse avec un excès d'eau.

7. Procédé selon une ou plusieurs des revendications 4 à 6, caractérisé en ce que l'on ajoute au milieu réactionnel gélifié, un alcool linéaire ou ramifié ayant de 4 à 12 atomes de carbone, du toluène, ou de l'o-, du m- ou du p-xylène, isolés ou en mélange.

8. Procédé selon une ou plusieurs des revendications 4 à 7, caractérisé en ce que l'on met en oeuvre une partie ou aussi la quantité totale du solvant largement insoluble dans l'eau, qui doit être ajouté lors ou après le début de la gélification, déjà dans l'étape d'hydrolyse, à côté du solvant utilisé ici.

9. Procédé selon une ou plusieurs des revendications 4 à 8, caractérisé en ce que l'on effectue la gélification et le formage à pression normale ou sous une surpression, qui correspond à la somme des pressions partielles des composants du mélange réactionnel à la température respectivement utilisée.

10. Procédé selon une ou plusieurs des revendications 4 à 9, caractérisé en ce que l'on gélifie l'aminoorganosilane selon la formule (V) seul ou ensemble avec l'agent de réticulation (VIII) et/ou le silane organofonctionnel (VI) séparément, que l'on homogénéise avec le solvant largement insoluble dans l'eau et que l'on ajoute ensuite à l'homogénéisat les composants qui manquent encore pour le copolycondensat.

11. Procédé selon l'une ou plusieurs des revendications 4 à 9, caractérisé en ce que l'on précondense en vue de l'obtention de copolycondensats statistiques de forme précise, l'aminoorganosilane de formule (V), le silane organofonctionnel (VI) et le ou les agents de réticulation selon la formule (VIII) sur une durée de 5 mn jusqu'à 48 heures, sans ou en utilisant un solvant qui dissout les composants monomériques, de préférence en utilisant un alcool qui correspond aux groupes alcoxy, ayant de 1 à 5 atomes de carbone, en présence d'une quantité d'eau qui n'est pas suffisante pour une hydrolyse complète, de préférence de 1 à 100 % en mol de la quantité requise pourcela, à une température allant de la température ambiante à 200°C, et que l'on procède ensuite après addition d'une quantité supplémentaire d'eau et éventuelle de davantage de solvant supplémentaire comme pour la revendication 5.

12. Procédé selon la revendication 11, caractérisé en ce que la pré-condensation est effectuée en présence d'un catalyseur de condensation acide, basique ou renfermant un métal, de préférence en présence d'ammoniac.

13. Procédé d'obtention de copolycondensats en blocs, de forme précise, selon les revendications 1 à 3, caractérisé en ce que l'on précondense en premier lieu un aminoorganosilane tertiaire de formule générale (V) et un silane organofonctionnel de formule (VI), dans laquelle R₇ à R₁₁ ainsi que X ont une étendue de signification semblable à celle de la revendication 5 et, le cas échéant, un ou plusieurs agents de réticulation de formule générale (VIII), respectivement indépendamment l'un de l'autre, sans ou avec utilisation d'un solvant, en présence d'une quantité d'eau qui n'est pas suffisante pour une hydrolyse complète, de préférence en présence de 1 à 100 % en mol de la quantité requise pour cela, sur une durée de 5 min à 48 heures à une température allant de la température ambiante à 200°C, et qu'ensuite on réunit et que l'on effectue alors, après addition d'une quantité supplémentaire d'eau et le cas échéant de solvant, de sorte qu'au moins la quantité nécessaire stoechiométriquement pour l'hydrolyse complète et la polycondensation soit présente, l'hydrolyse complète et la polycondensation.

14. Procédé selon la revendication 13, caractérisé en ce que l'on effectue la précondensation en présence d'un catalyseur de condensation acide, basique ou contenant un métal, de préférence en présence d'ammoniac.

15. Procédé d'obtention de copolycondensats mixtes de forme précise, selon la revendications 1 à 3, caractérisé en ce que l'on pré-condense parmi les composants monomères prévus selon les formules (V), (VI) et (VIII), au moins un, indépendamment l'un de l'autre, pendant 5 min à 48 heures, sans ou avec utilisation d'un solvant, en présence d'une quantité d'eau qui n'est pas suffisante pour une hydrolyse complète, de préférence en présence de 1 à 100 % en mol de la quantité requise à cet effet, à une température allant de la température ambiante à 200°C, et qu'ensuite on réunit avec le ou avec les monomères qui n'ont pas été précondensés et que finalement après addition d'eau supplémentaire et le cas échéant de solvant supplémentaire, on effectue l'hydrolyse complète et la polycondensation conformément à la revendication 5.

16. Procédé de post-traitement des copolycondensats des organosiloxanes de forme précise obtenus selon l'une ou plusieurs des revendications 4 à 15, mais non séchés, caractérisé en ce que la substance solide réalisée sous la forme de billes est soumise en présence au moins du composant eau à un traitement thermique dans la phase liquide pendant une durée d'1 heure à 1 semaine, à une température allant de 50 à 300°C, de préférence de 100 à 200°C, au cours duquel on utilise, si besoin est, une surpression.

17. Procédé selon la revendication 16, caractérisé en ce que le post-traitement est effectué en présence d'un catalyseur acide, basique ou contenant un métal, de préférence en présence d'ammoniac.

18. Utilisation des copolycondensats d'organosiloxane amine de forme précise, conformément à l'invention selon les revendications 1 à 3, pour lesquels X représente : 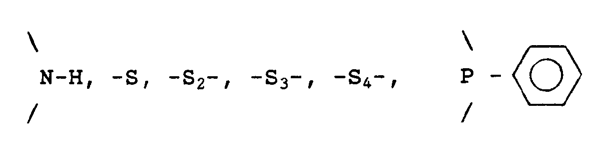 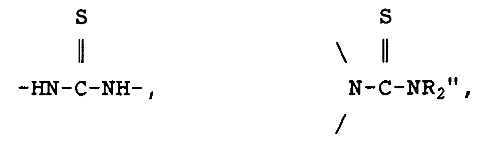 dans laquelle R" a la même signification que dans la revendication 1,
pour l'élimination des métaux dissous des solutions aqueuses ou organiques selon le principe statique ou dynamique.

19. Utilisation des copolycondensats d'organosiloxane amine de forme précise conformément à l'invention, selon les revendications 1 à 3,en vue de l'adsorption de composés organiques gazeux et/ou de vapeur d'eau, de préférence en vue de l'adsorption de solvants organiques.
